Europäisches Patentamt

European Patent Office

Office européen des brevets

(11) Publication number: **0 240 103**

**A2**

## (12) EUROPEAN PATENT APPLICATION

(21) Application number: **87300497.2**

(22) Date of filing: **21.01.87**

(51) Int. Cl.³: **A 01 G 3/03**

(30) Priority: **23.01.86 GB 8601659**

(43) Date of publication of application:
**07.10.87 Bulletin 87/41**

(84) Designated Contracting States:
**BE DE FR GB IT NL SE**

(71) Applicant: **Andrews, Brian**
**Box 333**
**Kenora Ontario R9N 3X4(CA)**

(72) Inventor: **Andrews, Brian**
**Box 333**
**Kenora Ontario R9N 3X4(CA)**

(74) Representative: **Frost, Dennis Thomas et al,**
**WITHERS & ROGERS 4 Dyer's Buildings Holborn**
**London, EC1N 2JT(GB)**

(54) **Tree trimming device.**

(57) A limb pruning device includes a source of power driving a shaft having a longitudinally extending cutter on the distal end thereof with a longitudinal fextending cutter blade parallel to the longitudinal axis of the cutter. An anvil extends outwardly and downwardly at approximately 45 degrees from its longitude axis and hooks over the limb to be cut and guides the cutter through the limb.

FIG.1

EP 0 240 103 A2

TREE TRIMMING DEVICE

BACKGROUND OF THE INVENTION

This invention relates to new and useful improvements in tree pruning devices, particularly tree pruning devices designed to operate at a height above which a normal person can reach with conventional tools such as hand saws and the like.

Conventionally, high limbing is undertaken with a chain saw with the operator standing on a ladder, elevated bucket device or the like or, alternatively, devices with relatively long handles are used with scissor-like shears at the upper end thereof either manually or power operated. Occasionally, a manually or power driven saw blade is attached to a relatively long handle. Also known is a chain saw type device mounted on a relatively long handle.

All of the latter methods are difficult to operate, tiring and time consuming and in general most inefficient.

The use of equipment such as chain saws and the like, when situated upon ladders or even when elevated in buckets, is dangerous as they are difficult to control unless used under ideal conditions.

- 2 -

## SUMMARY OF THE INVENTION

The present invention overcomes disadvantages inherent with existing equipment by utilizing a rotary cutter driven from a source of power with an anvil for engaging the branch and holding same steady while the cutter severs same.

In accordance with the invention there is provided a limb pruning device for trees, bushes and the like comprising in combination a handle component, a drive shaft extending longitudinally through said handle and means journalling said shaft for rotation therein, a cylindrical rotary cutter element secured to and extending axially from one end of said handle, said rotary cutter element having at least one cutting edge portion extending from the surface of said cutter element and being situated substantially parallel to the longitudinal axis of said cutter element, said cutting edge portion including a rake and angle relative to the periphery of said cutter element, an anvil component secured to said one end of said handle component, said anvil component including a support portion extending substantially spaced and parallel to the longitudinal axis of said handle and a limb engaging portion extending from the outer end of said support portion, outwardly and downwardly towards said one end of said handle component.

DESCRIPTION OF THE DRAWINGS

Figure 1 is a cross sectional partial schematic view of the upper end of the assembly showing the pruning device.

Figure 2 is a section of the cutter per se along the line 2-2 of Figure 1.

Figure 3 is a cross-sectional view of the support member along the line 3-3 of Figure 1.

Figure 4 is a cross-sectional view along the line 4-4 of Figure 1.

Figure 5 is a schematic view of a tree trunk and limb showing the relationship of the cutting device and anvil therewith.

Figure 6 is a fragmentary schematic view of a limb being cut with the cutter device with parts exaggerated in size for clarity.

Figure 7 is a cross-sectional view along the line 7-7 of Figure 1.

Figure 8 is a fragmentary partially schematic side elevation of the lower end of the handle of the device showing a source of power incorporated therein.

Figure 9 is a view similar to Figure 8 but showing a flexible cable connection if a remote source of power is utilized.

Figure 10 is a fragmentary, partially cross-sectional view of the preferred embodiment of the support structure for the outer end of the cutter.

In the drawings like characters of reference indicate corresponding parts in the different figures.

DETAILED DESCRIPTION

Proceeding therefore to describe the invention in detail, reference should be made to the accompanying drawings which shows an elongated drive shaft 10 journalled for rotation within an elongated handle component collectively designated 11 and which may be of any convenient length depending upon design parameters.

The lower end of drive shaft 10 extends through one end 12 of the handle component and is supported within a bearing 13 adjacent this one handle.

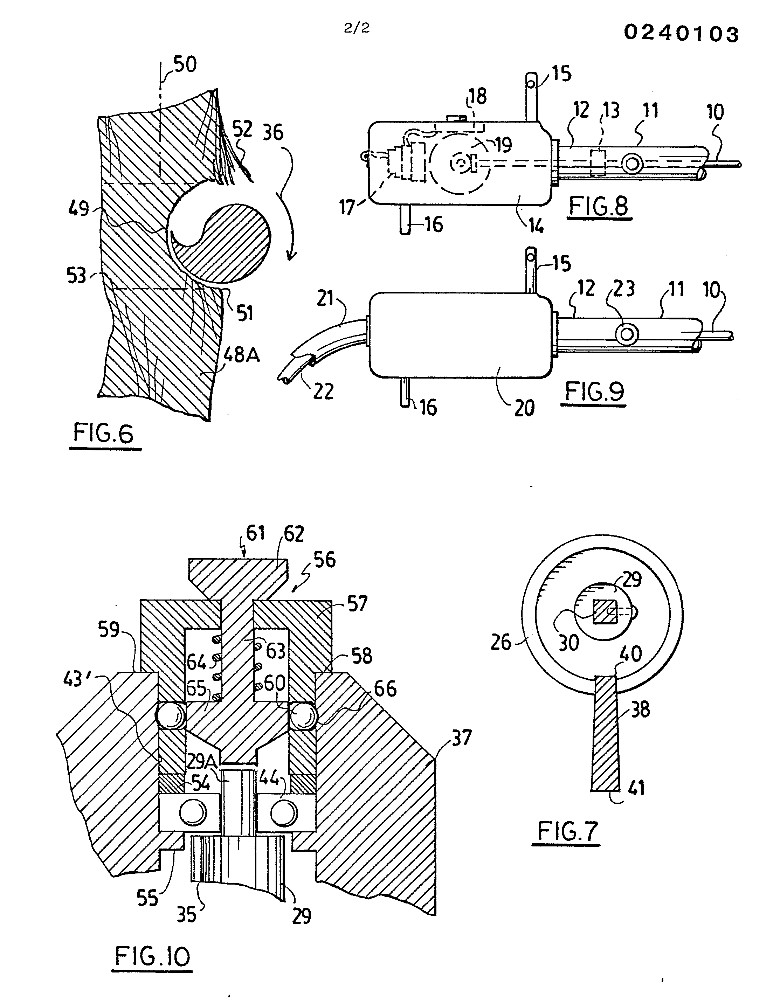

Figures 8 and 9 show an enclosure 14 having an upper handle 15 and a lower handle 16. This enclosure may carry a source of power shown schematically by reference character 17 and which may take the form of a small gasoline engine. A fuel tank 18 may be incorporated and the lower most end of the drive shaft 10 is operatively connected to the output of this source of power as by example bevelled gears 19.

If a remote source of power is used such as a gasoline engine on a sled or back pack (not illustrated) then the power is connected to the drive shaft 10 within a casing 20 at the lower end 12 thereof, by means of a flexible drive cable 21 which is conventional. Speed control of the rotation of the drive shaft may be connected to one of the handle grips 15 or 16, by means of Bowden cable assembly 22 also extending from the casing to the source of power.

Alternatively of course, the source of power may operate a hydraulic pump and motor assembly which is conventional and which therefore is not illustrated in the accompanying drawings. A stub handle 23 may extend from the handle component 11 adjacent the end 12 to enable the operator to support and operate the device readily and easily.

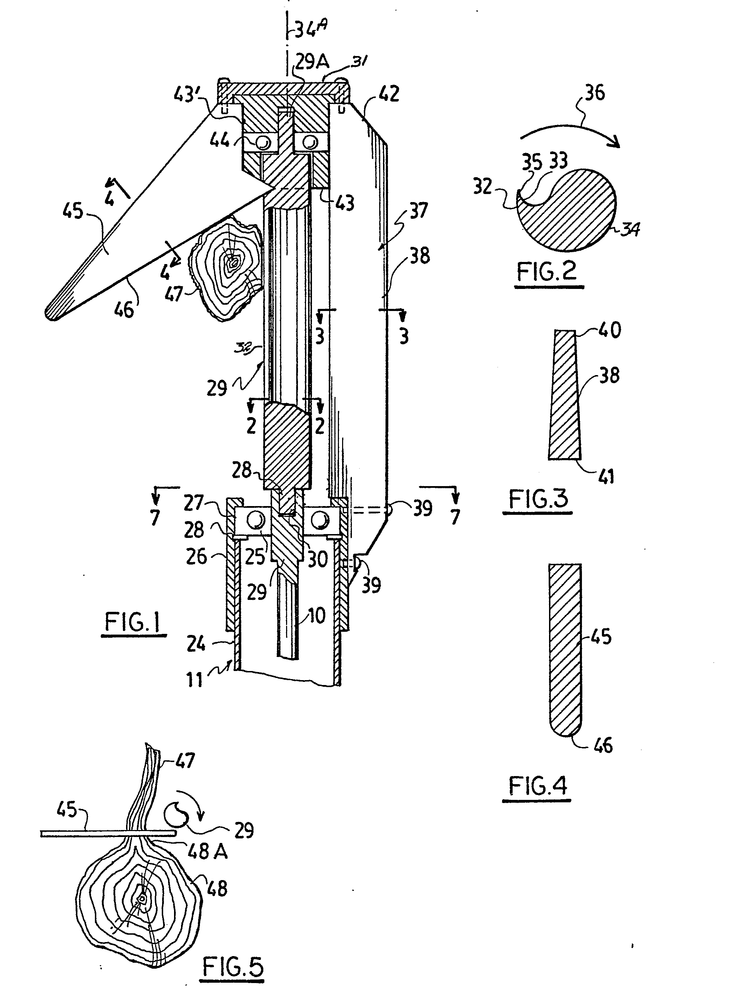

Figure 1 shows, in section, the upper end 24 of the handle component with the drive shaft 10 being supported in a further bearing assembly 25 situated within a sleeve 26 engaged and secured over the end 24 of the handle component. The bearing rests within a recess 24 and upon a shoulder 28 as clearly shown.

The upper end of the drive shaft 10 is in the form of a socket into which engages the lower end 28 of a cylinder rotary cutter element collectively designated 29. This socket may be shaped to receive a correspondingly shaped spigot portion 30 of the cutter element and retention is provided by the bearing upper 44 and cap assembly 31 so that the cylindrical cutter element extends axially from the drive shaft 10 beyond the upper end of 26 of the handle assembly.

This rotary cutter element is provided with at least one longitudinally extending cutting edge portion 32 formed with a rake angle 33 relative to the perimeter or surface 34 of the cutter element. This cutting edge portion extends the full length of the rotary element 29 and is parallel to the longitudinal axis 34A of the cutter element.

The cutting edge 35 of the edge portion 32 extends as a leading edge, slightly beyond the surface 34 of the cutter element, it being understood that said cutter element rotates in the direction of arrow 36 and the amount that this leading edge 35 extends beyond the surface 34 controls the depth of cut per revolution of the device.

An anvil assembly 37 is provided and consists of a support bar 38 secured to the end 26 of the handle portion by means of screws or bolts 39. Other securing means may of course be provided.

This support bar 38 extends from the end 26 of the handle 10 spaced and parallel to the longitudinal axis 34A of the cutter element and spaced slightly therefrom as clearly illustrated in Figure 1.

Figure 3 shows the preferred cross-sectional configuration of this support which increases in width from the edge 40 which is parallel to the surface of the cutter element 29, to the outer edge 41 and this assists in clearing chips during use and also prevents any small twigs or branches from jambing between the cutter element and the support member or bar.

At the distal end 42 of this bar there is provided a cross piece 43 having an aperture or bore 43' into which is detachably retained a further bearing 44 to support the distal end 29A of the cutter element in a conventional manner.

A guide bar or limb engaging portion 45 extends outwardly and downwardly from the cross member 43 towards the end 26 of the handle component and terminates spaced from this end 26 as clearly shown. The angle of the inner edge 46 of this limb engaging portion is approximately 45 degrees from the longitudinal axis 34A of the cutter element.

This inner edge 46 is rounded as shown in Figure 4 and engages a limb 47 when the cutting action is initiated. This rounded or smooth edge 46 is important because if it is not rounded but is relatively sharp or channel-like as in U.S. Patent No. 3,158,933 R.F. David, December 1, 1984, then there is a tendency for the device to dig into relatively soft bark of the limb being cut and jamb the cutter due to a wedging effect which can occur.

In operation, the limb engaging portion 45 is hooked over the limb 47 to be cut, which is extending from the trunk 48 shown schematically in Figure 5.

Because the cutting edge 35 of the cutter element is parallel to the longitudinal axis of the assembly, no self feeding action occurs when the cutter rotates in the direction of arrow 36. This is in contrast with a spiral type cutter such as that shown in U.S. Patent 3158933 which tends either to reject the branch or limb or, alternatively, drags the cutter down with the possibility of jambing occurring.

The speed of rotation of the cutter element 29 should preferably be in excess of 9000 rpm because the cutting action increases dramatically due to the centrifical force imparted to the chip thus ejecting it clear of the cutter. When a small gasoline engine is used as a source of power, 9000 to 12000 rpm is attainable.

In fact, it is desirable that the speed or rotation be approximately 20,000 rpm and when positioned correctly on the limb 47, and pulled slowly into engagement therewith, makes successive arcuately curved cuts through the limb as illustrated by reference character 49 in Figure 6. To obtain this speed of rotation, a lightweight electric motor is used similar to that utilized in a router or disc sander.

If the cutting edge 35 is, for example, 5/-1000" proud of the surface 34 of the cutter and if the cutter is rotating at 20,000 rpm, then the cut will be at the approximate rate of 1.4 inches/second.

With the cutter rotating in the direction of arrow 36, the cutter should be positioned relative to the attaching end 48A of the limb 48. This means that the cutting edge attacks the limb perpendicular to the longitudinal axis 50 thereof and first strikes the limb on the side 48A thereof adjacent to the attachment of the limb to the trunk 48. This initial contact point is illustrated by reference character 51 in Figure 6.

As the cutter rotates, taking with it approximately 5/-1000" each rotation, there is a tendency for

- 10 -

the cutter to shatter the outer layer of the limb remote from the point of attachment to the trunk. This is illustrated schematically by reference character 52.

It will therefore be seen that a smooth surface 53 is formed by the cutter being perpendicular to the axis 50 and that any jaggedness or shattering occurs on the end of the limb portion that is severed from the stub 48A thus decreasing any possibility of infection occurring to the stub or the tree itself assisted by normal pruning compound treatment.

With the cutting blade edge being perpendicular to the longitudinal axis of the limb being severed, there is no self-feeding action so that no undesirable jambing can occur between the limb and the sloped surface 46 of the limb engaging portion 45 so that a gentle pressure by the operator is all that is required in order to continually engage the limb being severed, with the cutting edge.

Figure 10 shows the preferred method of supporting the outer end of the rotary cutter element 29 within aperture 43'. The bearing 44 is held within a resilient damper 54 which holds the outer spigot end 29A in a conventional manner.

This damper is provided to prevent the bearing 44 from rotating as it is a running fit in the upper end of the support 37.

Further, in order to avoid unnecessary axial loads on the bearing, a small shoulder 55 is provided at the base of the aperture 43' with the bore of the shoulder being greater than the diameter of the cutter 29.

A cap assembly collectively designated 56 is provided. This includes a cylindrical cap 57 which engages within the upper end of aperture 43' downwardly upon the resilient bushing 54 with shoulder 58 engaging the upper end 59 surrounding the aperture 43'. Ballbearings 60 are staked within apertures in the walls of the cap 57 and these protrude approximately one-third of their diameter into the walls of the upper end of the aperture 43' and, when in the position shown in Figure 10, these ballbearings cannot move inwardly because of the button and cam assembly portion collectively designated 61. This is a button 62 with stem 63 engaging downwardly through cap 57 and being maintained in the lower most position shown in Figure 10 by means of a compression spring 64 surrounding the spring and reacting between the underside of cap 57 and the upper side of the retainer shoulder 65 extending around the stem 63 adjacent the lower end thereof. In order to remove the assembly, cap 62 is pulled upwardly against pressure of spring 64 thus clearing the retaining shoulder 65 from the ballbearings 60 and allowing same to move inwardly and disengage the depressions 66 within the wall of aperture 43'. This enables the entire cap assembly to be withdrawn and hence resilient bushing 54, and bearing 44 so that the cutter bar can be disengaged from the assembly for sharpening and/or replacement.

The balls are retained within the wall of the cap 57 by staking (not illustrated).

CLAIMS

(1)    A limb pruning device for trees, bushes and the like characterized by a handle component, a drive shaft extending longitudinally through said handle and means journalling said shaft for rotation therein, a cylindrical rotary cutter element secured to and extending axially from one end of said handle, said rotary cutter element having at least one cutting edge portion extending from the surface of said cutter element and being situated substantially parallel to the longitudinal axis of said cutter element, said cutting edge portion including a rake and angle relative to the periphery of said cutter element, an anvil component secured to said one end of said handle component, said anvil component including a support portion extending substantially spaced and parallel to the longitudinal axis of said handle and a limb engaging portion extending from the outer end of said support portion, outwardly and downwardly towards said one end of said handle component.

(2)    The device according to Claim 1 in which the leading edge of said cutting edge portion engages the limb being cut, substantially perpendicular to the longitudinal axis thereof and on the side of said limb closes to the point of attachment thereof.

(3)    The device according to Claim 1 or 2 in which the cross sectional configuration of said support portion of said anvil component, when viewed in cross section, increasing in width from the side adjacent said cutter element towards the outer side thereof thereby facilitating chip removal when in use.

(4)    The device according to Claims 1, 2 or 3 which includes means at the junction between said support portion and said limb engaging portion of said anvil, to bearingly support the outer end of said cutter element.

(5)    In combination with a source of power, a pruning device for trees, bushes and the like characterized by an elongated substantially cylindrical support handle, a drive shaft extending therethrough and being operatively connected to said source of power at one end of said handle, means journalling said drive shaft for rotation within said handle, a cylindrical cutter element at one end of said handle detachably secured to the end of said drive shaft adjacent said other end of said handle, said cylindrical cutter element having at least one cutting edge portion extending from the periphery of said cutter element and extending parallel to the longitudinal axis thereof, said cutting edge portion including a leading cutting edge situated at a rake angle relative to the surface of said cutter element, an anvil component to said other end of said handle component, said anvil component including a support portion extending substantially spaced and parallel to said longitudinal axis and a limb engaging portion extending from the outer end of said support portion outwardly and downwardly towards said other end of said handle but terminating spaced from other end.

(6)     The device according to Claim 5 in which the leading edge of said cutting edge portion engages the limb being cut, substantially perpendicular to the longitudinal axis thereof and on the side of said limb closes to the point of attachment thereof.

(7)     The device according to Claims 5 or 6 in which the cross sectional configuration of said support portion of said anvil component, when viewed in cross section, increasing in width from the side adjacent said cutter element towards the outer side thereof thereby facilitating chip removal when in use.

(8)     The device according to Claims 5, 6 or 7 in which the cross sectional configuration of said support portion of said anvil component, when viewed in cross section, increasing in width from the side adjacent said cutter element towards the outer side thereof thereby facilitating chip removal when in use.

(9) The device according to any of the proceeding claims in which said means includes a bearing within said junction, said outer end being supported within said bearing, and further means to detachably secure said bearing within said junction, said further means including a bore formed within said junction, a shoulder adjacent the inner end thereof against which said bearing engages, a resilient damper within said bore engaging the outer side of said bearing and retaining said bearing against rotation, and a cap assembly within the outer end of said bore, said cap assembly including a retainer having a spring loaded means moveable endwise relative to said cap and including detent means engaging the wall of said bore, cam means on said retainer detachably engaging said detent means and being detachably positioned by said spring loaded means.

(10) The device according to any of the preceding claims in which the said limb engaging portion includes a convexedly curved limb contacting surface along one edge thereof.

0240103

FIG.1

FIG.2

FIG.3

FIG.4

FIG.5

FIG.6

FIG.8

FIG.9

FIG.7

FIG.10